# EUROPÄISCHE PATENTSCHRIFT

(11) **EP 2 519 476 B1**
(45) Veröffentlichungstag und Bekanntmachung des Hinweises auf die Patenterteilung: **14.01.2015**
(21) Anmeldenummer: 10812997.4
(22) Anmeldetag: 15.12.2010
(51) Int. Cl.: C02F 11/12, C02F 11/18, C02F 101/10, C02F 101/20, C02F 11/00, C04B 7/44, C02F 103/12

(54) **VERFAHREN ZUM VERWERTEN VON PHOSPHORHALTIGEN ALTERNATIVEN BRENNSTOFFEN BEI DER ZEMENTHERSTELLUNG**
METHOD FOR RECOVERING PHOSPHORUS-CONTAINING ALTERNATIVE FUELS IN CEMENT PRODUCTION
PROCÉDÉ DE VALORISATION DE COMBUSTIBLES DE SUBSTITUTION PHOSPHORÉS LORS DE LA FABRICATION DU CIMENT

(30) Priorität: 28.12.2009 AT 20422009
(43) Veröffentlichungstag der Anmeldung: 07.11.2012
(73) Patentinhaber: Holcim Technology Ltd., 8645 Rapperswil-Jona (CH)
(72) Erfinder: BRÜLHART, Marc, CH-8832 Wollerau (CH); ERNST, Frank, O., CH-8037 Zürich (CH); REICHENBACH DE SOUSA, Luiz Carlos, CH-8606 Greifensee (CH)
(74) Vertreter: Keschmann, Marc
(86) Internationale Anmeldenummer: PCT/IB2010/003265
(87) Internationale Veröffentlichungsnummer: WO 2011/080558

(56) Entgegenhaltungen:
- EP-A1- 1 669 467
- DE-A1- 3 411 144

## Beschreibung

Die vorliegende Erfindung betrifft ein Verfahren zum Verwerten von phosphorhaltigen alternativen Brennstoffen bei der Zementklinkerherstellung, bei welchem die alternativen Brennstoffe unter Nutzung von Abwärme aus dem Zementklinkerherstellungprozess in einem von einem Drehrohrofen des Zementklinkerherstellungsprozesses verschiedenen Thermolysereaktor thermolysiert werden, die dabei frei werdende Energie dem Zementklinkerherstellungsprozess zugeführt wird und die Thermolyserückstände der phosphorhaltigen alternativen Brennstoffe aus dem Thermolysereaktor ausgetragen werden.

Bei der Zementklinkerherstellung wird Zementrohmehl vorgewärmt und kalziniert, wobei CO₂ entweicht. Hierauf erfolgt das eigentliche Brennen in einem Drehrohrofen, woraufhin durch Kühlung des gebrannten Klinkers ein hydraulisches Produkt entsteht. Insgesamt werden für diese Prozesse erhebliche Energiemengen aufgewendet und es wird beständig versucht, die aufgewendete Energie möglichst zurückzugewinnen und für den Prozess bestmöglich wiederzuverwenden. Darüber hinaus besteht das Bestreben, für den Zementklinkerherstellungsprozess alternative Brennstoffe zu verwenden, d.h. Brennstoffe mit einem im Vergleich zu hochwertigem Erdgas oder Erdöl verringertem Brennwert, wobei solche alternativen Brennstoffe häufig in Form von Abfällen zur Verfügung stehen. Alternative Brennstoffe sind in aller Regel schwerer brennbar als konventionelle Brennstoffe wie zum Beispiel Erdöl und Erdgas und können deshalb nur begrenzt in den Brennern des Drehrohrofens bzw. des Kalzinators zum Einsatz gelangen. Häufig werden solche alternativen Brennstoffe daher in separaten Pyrolyse- bzw. Thermolysereaktoren aufgeschlossen oder verbrannt. Bei der Verwertung lediglich geringer Mengen von alternativen Brennstoffen in Form von Abfällen kann die dabei entstehende Asche bzw. Schlacke in den Klinkerofen eingebracht werden und somit im Produkt des Zementklinkerherstellungsprozesses aufgenommen und gebunden werden. Wenn jedoch größere Mengen der genannten alternativen Brennstoffe zum Einsatz gelangen sollen, so würden die daraus resultierenden relativ großen Mengen der Thermolyserückstände negative Einflüsse auf das Abbindeverhalten und die Festigkeit des hergestellten Klinkers ausüben. Beispielsweise ist es bekannt, dass Phosphor, der sich in den Thermolyserückständen befinden kann, die Frühfestigkeit von Zement beeinträchtigt.

Zur Vermeidung der negativen Auswirkungen von zu großen Asche- bzw. Schlackemengen im Zementklinker wurde beispielsweise in der deutschen Offenlegungsschrift DE 34 11 144 A1 ein Verfahren vorgeschlagen, bei welchem zur Verwertung von brennbaren Abfällen der Abfall getrennt verbrannt und das dabei entstehende Rauchgas zur Kalzinierung eingesetzt wird. Die Schlacke der Abfallverbrennung wird hierbei getrennt abgezogen, sodass die oben genannten Nachteile vermieden werden können. In diesem Dokument ist beschrieben, dass Schwermetalle und Schwermetallverbindungen, welche ebenfalls aus den eingesetzten Abfallstoffen herrühren, in Form ihrer Chloride oder Fluoride mit den Abgasen abgeführt werden und durch den Kontakt der Abgase mit dem Zementrohmehl von diesem absorbiert werden. Die Thermolyserückstände der alternativen Brennstoffe werden bei diesem Verfahren in ein Wasserbad ausgetragen und keiner besonderen weiteren Verwertung zugeführt.

Um den oben genannten Phosphorgehalt der alternativen Brennstoffe beispielsweise als Dünger, der auf landwirtschaftliche Flächen ausgebracht werden kann, nutzen zu können, ist selbstverständlich eine besonders gründliche Entfernung von eventuell vorhandenen Schwermetallen und Schwermetallverbindungen von Nöten, weshalb eine erhöhte Zufuhr von Halogenen erforderlich ist, um die Schwermetalle und Schwermetallverbindungen in Form ihrer Halogenide aus dem Thermolyserückstand zu entfernen.

Bei der Zementklinkerherstellung neigen Chlor bzw. Chloride dazu, Kreisläufe im Zementofen zu bilden, die die Bildung von Anbackungen im Ofeneinlaufbereich, im Steigschacht oder im Bereich des Zyklonvorwärmers/Wärmetauschers begünstigen. Verursacht durch die hohen Temperaturen im Drehohrofen verdampfen die im Ausgangsmaterial und den alternativen Brennstoffen enthaltenen Chloride, wobei dann, wenn den heißen Ofengasen Wärme entzogen wird, was beispielsweise in Wärmetauschern der Fall ist, eine Kondensation dieser Chloride erfolgt. Somit bilden die Chloride einen Kreislauf, der zu einer Anreicherung im Zementofen, bzw. im Wärmetauschersystem führt. Zur Abreicherung wird üblicherweise chloridbeladenes und staubhaltiges Ofengas abgezogen und durch Quenchen wird das Chlorid auf dem Staub abgeschieden. Diese chlorhaltigen Stäube können bei geringem Chloridgehalt in den Zementherstellungsprozess zurückgeführt werden. Bei hohen Chlor- bzw. Chloridgehalten ist das Einbringen der derart beladenen Zementofen-Bypassstäube in den Zementherstellungsprozess jedoch nicht wünschenswert.

Der Erfindung liegt somit die Aufgabe zu Grunde, ein Verfahren der eingangs genannten Art dahingehend zu verbessern, dass die Bildung von Chloridkreisläufen im Zementklinkerherstellungsprozess reduziert wird und gleichzeitig eine besonders wirkungsvolle Entfernung von Schwermetallen aus den Thermolyserückständen der Verwertung von alternativen Brennstoffen gelingt, sodass die Thermolyserückstände als phosphorhaltiger Dünger, in welchem der Phosphor in einer für Pflanzen verwertbaren Form vorliegt, ausgebracht werden können.

Zur Lösung dieser Aufgabe ist ein Verfahren der eingangs genannten Art erfindungsgemäß dahingehend weitergebildet, dass die Thermolyserückstände der phosphorhaltigen alternativen Brennstoffe in dem Thermolysereaktor mit Zementofen-Bypassprodukten als Halogenträgern versetzt werden und die entstehenden Schwermetallhalogenide abgezogen werden. Durch die Verwendung von Zementofen-Bypassprodukten, die als Stäube und/oder Gase vorliegen können, als Halogenträger für die Entfernung von Schwermetallen und Schwermetallverbindungen aus den Thermolyserückständen der phosphorhaltigen alternativen Brennstoffe wird ein ausreichend hoher Chloridgehalt in dem Thermolysereaktor eingehalten, um eine praktisch vollständige Abreicherung der Schwermetalle und Schwermetallverbindungen in dem als Dünger zu verwendenden Thermolyserückstand sicherzustellen. Wenn, wie es erfindungsgemäß vorgesehen ist, die entstehenden Schwermetallhalogenide abgezogen werden und nicht in den Zementklinkerherstellungsprozess eingebracht werden, kann nicht nur ein an Schwermetallen weitgehend freier Zementklinker produziert werden, sondern die Schwermetalle können auch einer gewinnbringenden Verwertung in der Nichteisen-Metallindustrie zugeführt werden. Insgesamt können die Zementofen-Bypassprodukte auf eine neue Art genutzt werden, wobei ein als Dünger nutzbares Produkt aus der Verwertung der alternativen Brennstoffe aus dem Thermolysereaktor und dem Zementklinkerherstellungsprozess ausgetragen wird, welches praktisch frei von Schwermetallrückständen ist, und ein zusätzlicher wirtschaftlicher Nutzen durch die Gewinnung von wertvollen Schwermetallen durch die Aufbereitung der abgezogenen Schwermetallhalogenide nach im Stand der Technik bekannten Verfahren erzielt wird.

Zur Gewinnung der Chloride kann im Rahmen der Erfindung mit Vorteil so vorgegangen werden, dass staubbeladenes und chloridhaltiges Ofengas als Zementofen-Bypassprodukt abgezogen und in den Thermolysereaktor geleitet wird. In diesem Fall wird das Ofengas im Bereich des Ofeneinlaufs abgezogen und direkt zur Umsetzung der Schwermetalle im Thermolysereaktor eingesetzt.

Gemäß einer bevorzugten Ausführungsform der vorliegenden Erfindung kann jedoch auch so vorgegangen werden, dass der Chloridgehalt von zementofen-Bypassstäuben als Zementofen-Bypassprodukt durch Quenchen vor der Zugabe zu den Thermolyserückständen der phosphorhaltigen alternativen Brennstoffe in dem Thermolysereaktor angehoben wird, wodurch ein chloridreicher Staub gebildet wird, der einen im Vergleich zum Rohmehl erhöhten Chloridgehalt aufweist. Beim Quenchen erfolgt eine rasche Abkühlung der abgezogenen Ofenrauchgase, wodurch das in der Gasphase enthaltene Clor bzw. Chlorid auf den Feststoffpartikeln kondensiert und nach einer Abtrennung des Staubs in einem Filter zur Umsetzung im Thermolysereaktor herangezogen werden kann.

Um eine weitere Chloridquelle für die Entfernung von Schwermetallen aus den Thermolyserückständen der phosphorhaltigen alternativen Brennstoffe zu erschließen, kann gemäß einer bevorzugten Ausbildungsform der vorliegenden Erfindung derart vorgegangen werden, dass zusätzlich zu den Zementofen-Bypassprodukten chloridhaltige alternative Brennstoffe als Halogenträger eingesetzt werden.

Um den in den phosphorhaltigen alternativen Brennstoffen vorhandenen Phosphor in eine für Pflanzen verwertbare Form zu bringen, sodass die Thermolyserückstände aus dem Thermolysereaktor als Dünger eingesetzt werden können, muss die Thermolyse bei ausreichend hohen Temperaturen durchgeführt werden. Zu diesem Zweck ist die Erfindung mit Vorteil dahingehend weitergebildet, dass die Temperatur im Thermolysereaktor zwischen 600 und 1200 °C eingestellt wird. Bei diesen Temperaturen finden mineralogische Veränderungen des Phosphors statt, welche es Pflanzen gestatten, den Phosphor aufzunehmen und für den Organismus verfügbar zu machen. Als besonders bevorzugt hat sich hierbei eine Verfahrensführung herausgestellt, bei der die Temperatur im Thermolysereaktor zwischen 800 und 1100 °C eingestellt wird.

Um die in den phosphorhaltigen alternativen Brennstoffen gebundene chemische Energie für den Zementklinkerherstellungspozess verfügbar zu machen, ist das erfindungsgemäße Verfahren bevorzugt dahingehend weitergebildet, dass in dem Thermolysereaktor oxidierende Bedingungen eingestellt werden und die Wärme des bei der Thermolyse entstehenden Rauchgases in den Zementklinkerherstellungsprozess eingebracht wird, wobei die fühlbare Wärme dieses Rauchgases vor allem im Kalzinator zum Kalzinieren des Rohmehls eingesetzt wird.

Zur Bildung einer ausreichend oxidierenden Atmosphäre für die Bildung des heißen Rauchgases ist das erfindungsgemäße Verfahren bevorzugt dahingehend weitergebildet, dass zur Einstellung oxidierender Bedingungen Oxidationsmittel in Form von Umgebungsluft, vorgeheizter Luft aus dem Zementklinkerherstellungsprozess, Sauerstoff, CO₂ und/oder Wasserdampf zugegeben werden. Der Wasserdampf kann hierbei dem Prozess zugeführt werden oder von der Feuchtigkeit der phosphorhaltigen alternativen Brennstoffe herrühren.

Alternativ zur Bildung eines heißen Rauchgases kann jedoch aus den alternativen Brennstoffen auch ein Brenngas durch Thermolyse gebildet werden. Mit Vorteil ist das Verfahren hierbei dahingehend weitergebildet, dass in dem Thermolysereaktor reduzierende Bedingungen eingestellt werden und das bei der Thermolyse entstehende Brenngas im Zementklinkerherstellungsprozess verbrannt wird, wobei ein solches Brenngas vorwiegend im Hauptbrenner des Klinkerofens zum Einsatz gelangt.

Prinzipiell sind als phosphorhaltige alternative Brennstoffe Abfallmaterialien verschiedener Herkunft denkbar. Als bevorzugt gilt es im Rahmen der Erfindung jedoch, dass Klärschlamm als phosphorhaltiger alternativer Brennstoff eingesetzt wird. Bei der Verwendung von Klärschlamm ergibt sich aus der Entsorgung des Klärschlamms mit einer effektiven Entfernung von Schwermetallen und der Bildung eines wertvollen Düngers insgesamt eine synergistische Integration von Abwasseraufbereitung, Zementklinkerherstellung, Düngemittelproduktion und Gewinnung von Schwermetallen, wodurch eine optimale Nutzung der vorhandenen Rohstoffe erreicht wird.

Klärschlamm weist in der Regel einen relativ hohen Feuchtigkeitsgehalt auf, sodass das Verfahren bevorzugt derart weitergebildet ist, dass der Klärschlamm vor der Thermolyse getrocknet wird, wobei hierbei bevorzugt derart vorgegangen wird, dass der Klärschlamm vor der Thermolyse bis zu einem Trockenmasseanteil von >60% getrocknet wird.

Um die im Zementklinkerherstellungsprozess vorhandenen Wärmemengen optimal zu nutzen, ist die Erfindung mit Vorteil dahingehend weitergebildet, dass für die Trocknung des Klärschlammes Wärme aus dem Zementklinkerherstellungsprozess verwendet wird. Hierfür kommt vor allem heiße Abluft aus dem Klinkerkühler in Frage, wobei je nachdem, aus welchem Bereich des Klinkerkühlers die Abluft entnommen wird, verschiedene Temperaturniveaus zur Verfügung stehen.

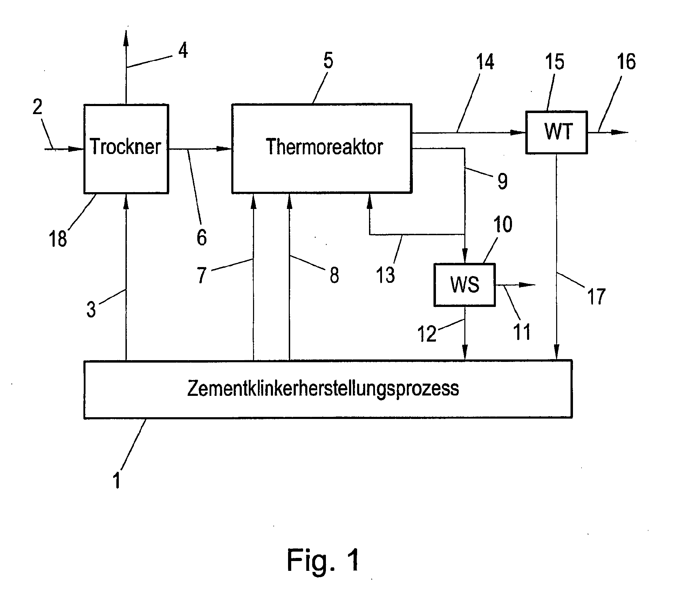

Die Erfindung wird im Folgenden anhand eines in der Zeichnung dargestellten Ausführungsbeispieles näher erläutert. In der Zeichnung zeigt Fig. 1 ein Fließschema einer zur Durchführung des erfindungsgemäßen Verfahrens geeigneten Anlage.

In Fig. 1 ist mit 1 eine Zementklinkerherstellungsanlage bezeichnet, welche im Wesentlichen aus einem Vorwärmer und Kalzinator, einem Drehrohrofen und einem Klinkerkühler besteht. Die erfindungsgemäß zum Einsatz gelangenden phosphorhaltigen alternativen Brennstoffe werden über eine Leitung 2 einem Trockner 18 zugeführt, welcher dazu dient, den Trockenmassegehalt der alternativen Brennstoffe, welcher beispielsweise für Klärschlamm zwischen 15 und 45% liegt auf Werte zwischen 60 und 100% anzuheben. Die hierfür benötigte Wärme wird dem Trockner über die Leitung 3 zugeführt, welche an die Zementklinkerherstellungsanlage 1 angeschlossen ist und beispielsweise Trocknungsluft aus dem Vorwärmer oder Kalzinator und insbesondere aus dem Klinkerkühler enthalten kann. Über die Leitung 4 wird das verdampfte Wasser aus dem Prozess entfernt.

Die eigentliche Thermolyse der alternativen Brennstoffe erfolgt im Thermolysereaktor 5, dem die vorgetrockneten alternativen Brennstoffe über eine Leitung 6 aufgegeben werden. Dem Thermolysereaktor wird heiße Prozessluft des Zementklinkerherstellungsprozesses über Leitungen 7 und erfindungsgemäß Zementofen-Bypassprodukte über eine Leitung 8 aufgegeben. Im Thermolysereaktor erfolgt die Thermolyse der phosphorhaltigen alternativen Brennstoffe, wobei der enthaltene Phosphor in eine für Pflanzen verwertbare mineralogische Form gebracht wird. Gleichzeitig werden eventuell enthaltene Schwermetalle durch die über die Leitung 8 eingebrachten Halogenträger und insbesondere durch Chloride in die flüchtigen Schwermetallhalogenide übergeführt, welche gemeinsam mit dem bei der Thermolyse entstehenden Gas über die Leitung 9 abgezogen werden. Falls das Produktgas als Brenngas vorliegt, wird es einem Wäscher 10 zugeführt. Im Wäscher werden die Schwermetallhalogenide in ihre feste Form überführt und können über eine Leitung 11 ausgetragen werden, wogegen das bei der Thermolyse entstehende Gas über eine Leitung 12 dem Zementklinkerherstellungsprozess zugeführt wird. Optional kann das Produktgas der Thermolyse über eine Leitung 13 auch zur Beheizung des Thermolysereaktors herangezogen werden, wenn es sich um ein Rauchgas handelt, das unter oxidierenden Bedingungen gebildet wurde.

Der Thermolyserückstand der Thermolyse, welcher Phosphor in einer für Pflanzen verwertbaren Form enthält, wird aus dem Thermolysereaktor über eine Leitung 14 abgezogen, einem Wärmetauscher 15 zur Rückgewinnung der Wärme geführt und über eine Leitung 16 ausgetragen. Die Wärme aus dem Wärmetauscher 15 kann über eine Leitung 17 wiederum dem Zementklinkerherstellungsprozess zugeführt werden.

## Patentansprüche

1. Verfahren zum Verwerten von phosphorhaltigen alternativen Brennstoffen bei der Zementklinkerherstellung, bei welchem die alternativen Brennstoffe unter Nutzung von Abwärme aus dem Zementklinkerherstellungprozess in einem von einem Drehrohrofen des Zementklinkerherstellungsprozesses verschiedenen Thermolysereaktor thermolysiert werden, die dabei frei werdende Energie dem Zementklinkerherstellungsprozess zugeführt wird und die Thermolyserückstände der phosphorhaltigen alternativen Brennstoffe aus dem Thermolysereaktor ausgetragen werden, **dadurch gekennzeichnet, dass** die Thermolyserückstände der phosphorhaltigen alternativen Brennstoffe in dem Thermolysereaktor mit Zementofen-Bypassprodukten als Halogenträgern versetzt werden und die entstehenden Schwermetallhalogenide abgezogen werden.

2. Verfahren nach Anspruch 1, **dadurch gekennzeichnet, dass** staubbeladenes und chloridhaltiges Ofengas als Zementofen-Bypassprodukt abgezogen und in den Thermolysereaktor geleitet wird.

3. Verfahren nach Anspruch 1 oder 2, **dadurch gekennzeichnet, dass** der Chloridgehalt von Zementofen-Bypassstäuben als Zementofen-Bypassprodukt durch Quenchen vor der Zugabe zu den Thermolyserückständen der phosphorhaltigen alternativen Brennstoffe in dem Thermolysereaktor angehoben wird.

4. Verfahren nach Anspruch 1, 2 oder 3, **dadurch gekennzeichnet, dass** zusätzlich zu den Zementofen-Bypassprodukten chlorhaltige alternative Brennstoffe als Halogenträger eingesetzt werden.

5. Verfahren nach einem der Ansprüche 1 bis 4, **dadurch gekennzeichnet, dass** die Temperatur im Thermolysereaktor zwischen 600 und 1200 °C eingestellt wird.

6. Verfahren nach einem der Ansprüche 1 bis 5, **dadurch gekennzeichnet, dass** die Temperatur im Thermolysereaktor zwischen 800 und 1100 °C eingestellt wird.

7. Verfahren nach einem der Ansprüche 1 bis 6, **dadurch gekennzeichnet, dass** in dem Thermolysereaktor oxidierende Bedingungen eingestellt werden und die Wärme des bei der Thermolyse entstehenden Rauchgases in den Zementklinkerherstellungsprozess eingebracht wird.

8. Verfahren nach Anspruch 7, **dadurch gekennzeichnet, dass** zur Einstellung oxidierender Bedingungen Oxidationsmittel in Form von Umgebungsluft, vorgeheizter Luft aus dem Zementklinkerherstellungsprozess, Sauerstoff, CO₂ und/oder Wasserdampf zugegeben werden.

9. Verfahren nach einem der Ansprüche 1 bis 6, **dadurch gekennzeichnet, dass** in dem Thermolysereaktor reduzierende Bedingungen eingestellt werden und das bei der Thermolyse entstehende Brenngas im Zementklinkerherstellungsprozess verbrannt wird.

10. Verfahren nach einem der Ansprüche 1 bis 9, **dadurch gekennzeichnet, dass** Klärschlamm als phosphorhaltiger alternativer Brennstoff eingesetzt wird.

11. Verfahren nach Anspruch 10, **dadurch gekennzeichnet, dass** der Klärschlamm vor der Thermolyse getrocknet wird.

12. Verfahren nach Anspruch 10 oder 11, **dadurch gekennzeichnet, dass** der Klärschlamm vor der Thermolyse bis zu einem Trockenmasseanteil von >60% getrocknet wird.

13. Verfahren nach einem der Ansprüche 10, 11 oder 12, **dadurch gekennzeichnet, dass** für die Trocknung des Klärschlammes Wärme aus dem Zementklinkerherstellungsprozess verwendet wird.

## Claims

1. A method for utilizing phosphorus-containing alternative fuels in the cement clinker production, in which the alternative fuels are thermolyzed using waste heat from the cement clinker production process in a thermolysis reactor different from a rotary kiln of the cement clinker production process, the energy thereby released is supplied to the cement clinker production process, and the thermolysis residues of the phosphorus-containing alternative fuels are discharged from the thermolysis reactor, **characterized in that** the thermolysis residues of the phosphorus-containing alternative fuels are mixed in the thermolysis reactor with cement kiln bypass products as halogen carriers and the heavy-metal halides produced are drawn off.

2. The method according to claim 1, **characterized in that** dust-loaded and chloride-containing kiln gas is drawn off as a cement kiln bypass product and lead into said thermolysis reactor.

3. The method according to claims 1 or 2, **characterized in that** the chloride content of cement kiln bypass dusts as a cement kiln bypass product is increased by quenching prior to addition to said thermolysis residues of said phosphorus-containing alternative fuels in said thermolysis reactor.

4. The method according to claims 1, 2 or 3, **characterized in that** in addition to said cement kiln bypass products, chlorine-containing alternative fuels are used as halogen carriers.

5. The method according to any of claims 1 to 4, **characterized in that** the temperature in said thermolysis reactor is set between 600 and 1200 °C.

6. The method according to any of claims 1 to 5, **characterized in that** said temperature in said thermolysis reactor is set between 800 and 1100 °C.

7. The method according to any of claims 1 to 6, **characterized in that** oxidizing conditions in said thermolysis reactor are set and the heat of the flue gas resulting from thermolysis is introduced into said cement clinker production process.

8. The method according to claim 7, **characterized in that** for setting the oxidizing conditions, oxidizing agents in the form of ambient air, pre-heated air from the cement clinker production process, oxygen, CO₂ and/or water vapor are added.

9. The method according to any of claims 1 to 6, **characterized in that** reducing conditions are set in said thermolysis reactor and the fuel gas resulting from thermolysis is combusted in said cement clinker production process.

10. The method according to any of claims 1 to 9, **characterized in that** sewage sludge is used as said phosphorus-containing alternative fuel.

11. The method according to claim 10, **characterized in that** said sewage sludge is dried prior to thermolysis.

12. The method according to claims 10 or 11, **characterized in that** said sewage sludge is dried prior to thermolysis up to a dry matter content of >60 %.

13. The method according to any of claims 10, 11 or 12, **characterized in that** heat from said cement clinker production process is used for said drying of said sewage sludge.

## Revendications

1. Procédé d'exploitation de combustibles de substitution contenant du phosphore dans la fabrication de clinker, dans lequel les combustibles de substitution sont soumis à une thermolyse en utilisant la chaleur dégagée du processus de fabrication du clinker dans un réacteur de thermolyse qui diffère du four rotatif du processus de fabrication du clinker, l'énergie alors libérée étant amenée dans le processus de fabrication du clinker et les résidus de la thermolyse des combustibles de substitution contenant du phosphore étant évacués du réacteur de thermolyse, **caractérisé en ce que** les résidus de la thermolyse des combustibles de substitution contenant du phosphore sont mélangés dans le réacteur de thermolyse avec des produits de dérivation du four à ciment en tant que porteurs d'halogène, et les halogénures de métaux lourds formés sont évacués.

2. Procédé selon la revendication 1, **caractérisé en ce que** le gaz du four chargé en poussières et contenant du chlorure est soutiré en tant que produit de dérivation du four à ciment et dirigé dans le réacteur de thermolyse.

3. Procédé selon la revendication 1 ou 2, **caractérisé en ce que** la teneur en chlorure des poussières de dérivation du four à ciment en tant que produit de dérivation du four à ciment est augmentée par refroidissement rapide avant l'ajout aux résidus de thermolyse des combustibles de substitution contenant du phosphore dans le réacteur de thermolyse.

4. Procédé selon la revendication 1, 2 ou 3, **caractérisé en ce qu'**en plus des produits de dérivation du four à ciment, on utilise des combustibles de substitution contenant du chlore en tant que porteurs d'halogène.

5. Procédé selon l'une des revendications 1 à 4, **caractérisé en ce que** la température dans le réacteur de thermolyse est réglée entre 600 et 1200 °C.

6. Procédé selon l'une des revendications 1 à 5, **caractérisé en ce que** la température dans le réacteur de thermolyse est réglée entre 800 et 1 100 °C.

7. Procédé selon l'une des revendications 1 à 6, **caractérisé en ce que** l'on règle des conditions oxydantes dans le réacteur de thermolyse et **en ce que** la chaleur du gaz de combustion formé lors de la thermolyse est introduite dans le processus de fabrication du clinker.

8. Procédé selon la revendication 7, **caractérisé en ce que** pour régler les conditions oxydantes, on ajoute des agents oxydants sous forme d'air ambiant, d'air préchauffé issu du processus de fabrication du clinker, d'oxygène, de CO₂ et/ou de vapeur d'eau.

9. Procédé selon l'une des revendications 1 à 6, **caractérisé en ce que** l'on règle des conditions réductrices dans le réacteur de thermolyse et **en ce que** le gaz de combustion formé lors de la thermolyse est brûlé dans le processus de fabrication du clinker.

10. Procédé selon l'une des revendications 1 à 9, **caractérisé en ce que** l'on utilise des boues d'épuration en tant que combustible de substitution contenant du phosphore.

11. Procédé selon la revendication 10, **caractérisé en ce que** les boues d'épuration sont séchées avant la thermolyse.

12. Procédé selon la revendication 10 ou 11, **caractérisé en ce que** les boues d'épuration sont séchées avant la thermolyse jusqu'à obtention d'une fraction de matière sèche > 60 %.

13. Procédé selon l'une des revendications 10, 11 ou 12, **caractérisé en ce que** pour le séchage des boues d'épuration, on utilise de la chaleur issue du processus de fabrication du clinker.
